(19) Europäisches Patentamt
European Patent Office
Office européen des brevets

(11) **EP 1 976 927 B1**

(12) **FASCICULE DE BREVET EUROPEEN**

(45) Date de publication et mention de la délivrance du brevet:
**16.03.2011 Bulletin 2011/11**

(21) Numéro de dépôt: **07712656.3**

(22) Date de dépôt: **05.01.2007**

(51) Int Cl.:
*C08L 23/00* $^{(2006.01)}$    *C08K 5/00* $^{(2006.01)}$
*C08L 27/16* $^{(2006.01)}$

(86) Numéro de dépôt international:
**PCT/FR2007/050612**

(87) Numéro de publication internationale:
**WO 2007/080338 (19.07.2007 Gazette 2007/29)**

(54) **AGENT D'EXTRUSION A BASE D'UN PVDF HETEROGENE**

EXTRUSIONSMITTEL AUF BASIS VON HETEROGENEM PVDF

EXTRUSION AGENT BASED ON A HETEROGENEOUS PVDF

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **13.01.2006 FR 0600297**
        **21.04.2006 US 793987 P**

(43) Date de publication de la demande:
**08.10.2008 Bulletin 2008/41**

(73) Titulaire: **ARKEMA FRANCE**
**92700 Colombes (FR)**

(72) Inventeurs:
• **BONNET, Anthony**
  **F-27170 Beaumont Le Roger (FR)**
• **LAFFARGUE, Johann**
  **F-27300 Bernay (FR)**
• **BEAUME, François**
  **F-27300 Bernay (FR)**

(56) Documents cités:
**EP-A- 1 616 907**    **EP-A- 1 714 996**
**US-A- 5 015 693**

**Description**

**[Domaine de l'invention]**

La présente invention concerne un agent d'aide à l'extrusion (en Anglais, « processing aid ») c'est-à-dire un additif qui permet de réduire ou d'éliminer les défauts de surface qui apparaissent lorsqu'on extrude une résine thermoplastique. L'agent d'aide à l'extrusion (ou agent d'extrusion dans la suite de la demande) comprend au moins un PVDF hétérogène (A) et au moins un agent d'interface (B), qui sont éventuellement dilués dans une polyoléfine (C).

**[Le problème technique]**

Au cours de l'extrusion de résines thermoplastiques, en particulier les polyoléfines, notamment sous forme de films, des irrégularités d'écoulement peuvent apparaître à la sortie de la filière de l'extrudeuse ce qui entraîne des défauts de surface et parfois l'altération des propriétés mécaniques et/ou optiques. Ce phénomène apparaît surtout lorsqu'on dépasse un taux de cisaillement critique. En dessous du taux critique, les extrudés sont lisses alors qu'au-dessus, on observe des défauts de surface. Ces défauts, qu'on appelle "melt fracture", se présentent sous plusieurs formes. A taux de cisaillement légèrement supérieur au taux critique, les films obtenus par extrusion-soufflage perdent leur transparence et leur brillance. Pour des taux nettement supérieurs (c'est-à-dire à productivité plus élevée), des défauts d'homogénéité avec des zones lisses dans une surface rugueuse apparaissent. Ces défauts diminuent de manière significative les propriétés optiques et/ou mécaniques du film. Les mêmes phénomènes peuvent être observés sur des joncs extrudés. Lorsque la surface des joncs perd en brillance et devient terne et rugueuse, elle est souvent comparée à une "peau d'orange".

On ajoute souvent à une résine thermoplastique une charge minérale ou organique. Par exemple, la silice peut être utilisée comme agent anti-bloquant (« anti-blocking agent »), le noir de carbone ou des pigments minéraux sont utilisés pour teinter la résine. Or l'ajout d'une charge a tendance à favoriser l'apparition des défauts de surface. Dans ce cas, les agents d'extrusion proposés dans l'art antérieur ne sont pas très efficaces, c'est-à-dire qu'ils ne permettent pas de réduire significativement les défauts d'extrusion ou bien il est nécessaire d'en ajouter en plus grande quantité que l'agent d'extrusion décrit dans la présente demande.

**[L'art antérieur]**

Dans le brevet US 3334157, l'incorporation du polytetrafluoroéthylène améliore les propriétés optiques d'un film de polyéthylène.

Dans US 2003/0236357, un fluoropolymère est utilisé comme agent d'aide à la mise en oeuvre en combinaison avec un agent d'interface.

Selon les brevets US 4855360, US 5587429, WO 00/44829 et WO 02/066544, un fluoroélastomère en combinaison avec un polyoxyalkylène (polyoxyéthylène glycol désigné aussi par PEG) est utilisé pour améliorer la transformation des polymères hydrocarbonés.

Dans US 5015693, le PEG et le fluoropolymère peuvent être mélangés à l'aide d'une extrudeuse ou un mélangeur Banburry, tous les deux étant à l'état fondu avant d'être introduit dans la matière à extruder.

Les organophosphates ou organophosphites en combinaison avec un fluoroélastomère ont été décrits dans les brevets US 4983677 et US 4863983 pour améliorer également la transformation des polymères hydrocarbonés.

Aucun de ces documents ne mentionne un PVDF hétérogène.

On a maintenant découvert que le mélange d'un PVDF hétérogène et d'un agent d'interface conduit à un agent d'extrusion plus efficace que les agents d'extrusion déjà décrits ou commercialisés.

**[Figures]**

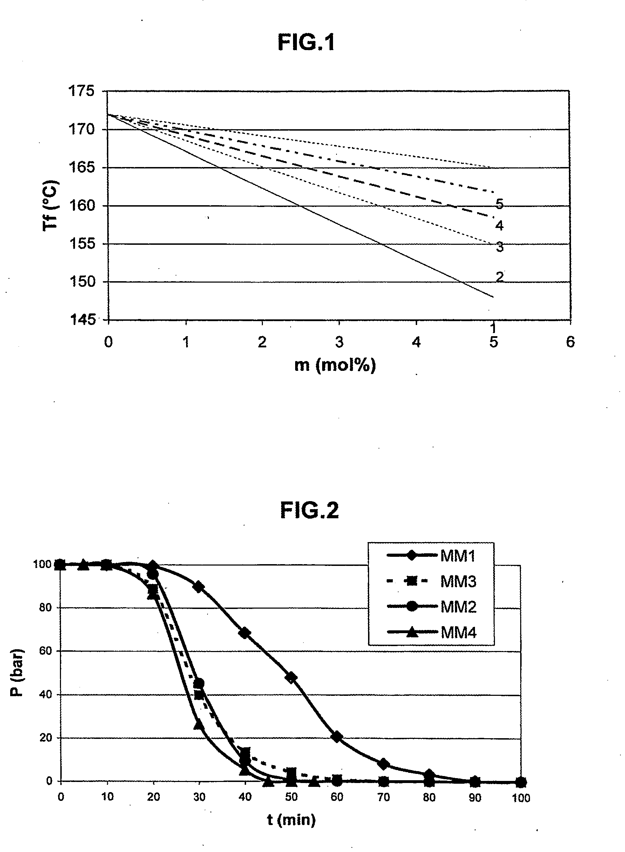

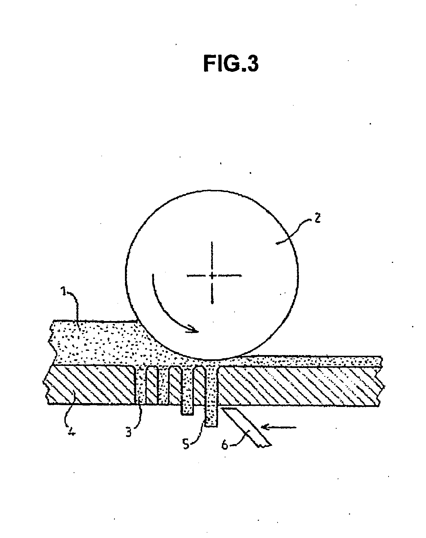

La figure 1/3 correspond à un graphe sur lequel est portée la température de fusion du PVDF (en ˚C) en fonction de la teneur en comonomère, exprimée en % molaire et désignée par m. La droite 1 correspond aux PVDF homogènes. Les droites 2, 3 , 4 et 5 correspondent respectivement aux relations 172-340 m, 172-269 m, 172-203 m et 172-138 m qui sont explicitées plus loin dans la définition du PVDF hétérogène.

La figure 2/3 illustre les résultats obtenus avec différents agents d'extrusion notés MM-1 à MM-4. Elle représente la pression relevée à la sortie de la filière en fonction de la durée d'extrusion.

La figure 3/3 illustre le fonctionnement d'une presse à granuler. Le produit ou le mélange de produits à granuler forme une couche 1 qui est constamment écrasée par le galet en rotation 2, c'est-à-dire précomprimé et pressé dans les canaux de compression 3 de la filière perforée 4. Un granulé cylindrique 5 sort ensuite au-dessous de la filière 4. Un dispositif de coupe 6, situé en-dessous de la filière 4, permet d'obtenir des granulés à la longueur désirée.

**[Brève description de l'invention]**

L'invention est relative à un agent d'extrusion comprenant :

- au moins un PVDF hétérogène (A) c'est-à-dire un copolymère du VDF et d'au moins un comonomère du VDF comprenant en poids au moins 75% de VDF qui présente une température de fusion Tf (exprimée en ˚C) comprise entre 160 et 172˚C
- et au moins un agent d'interface (B),
- éventuellement dilués dans une polyoléfine (C).

Il s'agit avantageusement aussi d'un copolymère VDF-HFP comprenant en poids de 88 à 92% de VDF et de 8 à 12% d'HFP.

L'agent d'extrusion est utilisé pour réduire ou éliminer les défauts de surface qui apparaissent lors de l'extrusion d'une résine thermoplastique (D). Celle-ci peut être une polyoléfine, une résine styrénique, un polyester ou un PVC. Elle peut être aussi éventuellement chargée, c'est-à-dire contenir des particules organiques ou minérales dispersées.

L'invention pourra être mieux comprise à la lecture de la description détaillée qui va suivre, des exemples de mise en oeuvre non limitatifs de celle-ci, et à l'examen des figures annexées.

**[Description détaillée de l'invention]**

**On désigne par PVDF**, un polymère comprenant en poids au moins 50%, avantageusement au moins 75%, de fluorure de vinylidène VDF ($CH_2=CF_2$).

**On désigne par PVDF hétérogène** un copolymère du VDF et d'au moins un comonomère du VDF (copolymérisable avec le VDF) qui se caractérise par le fait que les chaînes de polymère présentent une distribution en teneur moyenne en comonomère qui est multimodale ou étalée. Le terme « multimodal » n'est pas à entendre comme dans le document US 6277919 qui fait référence à un polymère fluoré caractérisé par des fractions de différentes masses moléculaires. Le PVDF hétérogène comprend de 0,1 à 25%, avantageusement de 1 à 20%, de préférence de 1 à 15%, encore plus préférentiellement de 5 à 15% d'au moins un comonomère pour respectivement de 75 à 99,9%, avantageusement de 80 à 99%, de préférence de 85 à 99%, encore plus préférentiellement de 85 à 95% de VDF.

Le comonomère peut être le fluorure de vinyle, le trifluoroéthylène ($VF_3$), le chlorotrifluoroéthylène (CTFE), le 1,2-difluoroéthylène, le tetrafluoroéthylène (TFE), l'hexafluoropropylène (HFP), les perfluoro(alkyl vinyl) éthers. Outre les comonomères cités, le PVDF hétérogène peut comprendre aussi un monomère non-fluoré tel qu'une oléfine, par exemple l'éthylène ou le propylène. Le comonomère est avantageusement l'HFP ou le CTFE. De préférence, le PVDF ne comprend comme monomères que le VDF et l'HFP ou le VDF et le CTFE et également avantageusement pas de TFE.

Le PVDF hétérogène comprend des chaînes de polymère riches en comonomère et des chaînes comprenant presque pas ou peu de comonomère. Cette répartition particulière du comonomère distingue le PVDF hétérogène d'un PVDF dit homogène pour lequel les chaînes de polymère présentent une distribution en teneur moyenne plus resserée (US 2752331 décrit par exemple un moyen d'obtenir un copolymère VDF-CTFE homogène). Cette répartition particulière du comonomère influe sur la cristallinité et sur la température de fusion Tf du PVDF. Le PVDF hétérogène présente une température de fusion Tf comprise généralement entre 160 et 172˚C. Par rapport à un PVDF homogène, la Tf du PVDF hétérogène est plus élevée. Autrement dit, on a :

Tf (PVDF homogène)<Tf (PVDF hétérogène)< 172˚C (PVDF homopolymère) de préférences la Tf est différente d'au moins 10% c'est-à-dire que l'on a : Tf (PVDF homogène) x 1,1 <Tf (PVDF hétérogène)< 172˚C (PVDF homopolymère)

Il est possible par ailleurs de définir la Tf d'un PVDF homogène par une relation mathématique simple reliée au pourcentage molaire global en comonomère(s) :

$$\text{Tf (PVDF homogène) en °C} = 172 - 549\,m$$

Plus le PVDF est hétérogène, plus sa Tf s'éloigne de celle d'un PVDF homogène. Plus précisément, on préférera donc les PVDF hétérogènes ayant une Tf entre (172 - 340 m) et 172˚C, plutôt entre (172-269 m) et 172˚C, avantageusement entre (172-203 m) et 172˚C, encore plus avantageusement entre (172-138 m) et 172˚C où m désigne le pourcentage molaire global en comonomère(s). Sur la figure 1/3, les PVDF hétérogène se situent donc au-dessus de la droite 2, plutôt au-dessus de la droite 3, avantageusement au-dessus de la droite 4, encore plus avantageusement au-dessus de la droite 5.

exemple

Un PVDF homogène comprenant en poids 90% de VDF et 10% d'HFP (4,53% mol) a une Tf de 147˚C. Un copolymère hétérogène ayant la même teneur globale en HFP présente une Tf (déterminée par DSC, ASTM D3418) comprise entre 156,6 et 172˚C, plutôt entre 159,8 et 172˚C, avantageusement entre 162,8 et 172˚C, encore plus avantageusement entre 165,7 et 172˚C. Un copolymère homogène qui comprend la même teneur globale en HFP aurait une Tf d'environ 148˚C.

Un PVDF hétérogène préféré est un copolymère VDF-HFP comprenant en poids de 88 à 92% de VDF et de 8 à 12% d'HFP présentant une Tf entre 160 et 172˚C, tel que par exemple le PVDF-1 (voir la partie exemples).

On prépare le PVDF hétérogène par une polymérisation en milieu dispersé aqueux (émulsion ou suspension). La polymérisation en émulsion aqueuse s'effectue en présence d'au moins un agent tensioactif (émulsifiant) choisi parmi les agents tensioactifs habituels, par exemple il peut s'agir de $C_6F_{13}C_2H_4SO_3K$ ou des agents tensioactifs décrits dans US 2559752 ou dans US 3311566**.** La polymérisation en suspension aqueuse s'effectue en présence d'un agent dispersant choisi parmi les agents habituels, par exemple un alcool polyvinylique, un éther de cellulose hydrosoluble (par ex. méthylcelluloses, méthylhydroxypropylcelluloses).

La polymérisation est amorcée par au moins un amorceur radicalaire organique ou hydrosoluble. Il peut s'agir par exemple d'un peroxyde (par ex. le peroxyde de ditertiobutyle), d'un peroxydicarbonate de dialkyle (par ex. le peroxydicarbonate de n-propyle, le peroxydicarbonate d'isopropyle) ou d'un persulfate. Pour chaque étape de la polymérisation, l'amorceur peut être mis en oeuvre en totalité au départ ou par portions successives ou bien introduit en continu. La quantité d'amorceur est généralement comprise entre 0,02 et 3% en poids par rapport aux monomères introduits.

Les masses moléculaires peuvent être éventuellement contrôlées par au moins un agent de transfert. Il peut s'agir par exemple d'une cétone (par ex. acétone), d'un aldéhyde, d'un alcool (par ex. tert-butanol, alcool isopropylique), d'une oléfine. La quantité d'agent de transfert est généralement comprise entre 0,1 et 5% en poids par rapport aux monomères introduits. Pour chaque étape de la polymérisation (comme par exemple pour les étapes des deux méthodes de préparation qui sont données ci-après), l'agent de transfert éventuel peut être mis en oeuvre en totalité au départ ou par portions successives ou bien introduit en continu.

La polymérisation est généralement conduite entre 50 et 130˚C, sous une pression comprise entre 30 et 200 bars.

Différentes méthodes possibles de préparation d'un PVDF hétérogène sont données. Selon une 1ère méthode, on peut :

- dans une 1ère étape, polymériser le VDF et le comonomère, puis
- dans une 2ème étape, après avoir converti entre 10 et 60%, on n'introduit et ne polymérise plus que du VDF.

Au cours de la 1ère étape, on peut introduire le VDF initialement en totalité mais il peut être préférable de n'introduire qu'une partie de la charge, le reste étant ajouté progressivement en cours de copolymérisation de façon à maintenir une pression constante dans le réacteur. Le comonomère est introduit en une seule fois ou progressivement selon sa réactivité avec le VDF. Au cours de la 2ème étape, on poursuit la polymérisation avec du VDF uniquement. Des exemples sont donnés dans la demande EP 0280591 A1**.**

exemple 1 illustrant la 1ère méthode: copolymère hétérogène VDF/$C_2F_3Cl$ (12%

en poids $C_2F_3Cl$)

Dans un autoclave de 60 litres, on introduit 40 litres d'eau désionisée, 40 g d'émulsifiant de formule $C_6F_{13}C_2H_4SO_3K$, 4 g de pyrophosphate de sodium, 4 g de persulfate de potassium et 500 g d'une paraffine fondant entre 54 et 56˚C. On règle la température à 80˚C, on purge le réacteur sous vide et on introduit 50 g d'acétone, 600 g de $C_2F_3Cl$ et on admet une pression de 90 bar de VDF. Lorsque la baisse de pression atteint 3 bar, on introduit de façon régulière du VDF pour maintenir la pression à 90 bar. On introduit alors le $C_2F_3Cl$ à raison de 0,3 g de $C_2F_3Cl$ par gramme de VDF qui est introduit pour maintenir la pression à 90 bar. Après 5,46 kg de VDF et 1,64 kg de $C_2F_3Cl$, on arrête l'alimentation en $C_2F_3Cl$ et on ajoute 400 g d'acétone et 1 g de persulfate de potassium, puis 6,82 kg de VDF à une vitesse permettant de maintenir la pression à 90 bar. La vitesse d'introduction du VDF est de l'ordre de 3 kg/h pendant et après l'ajout de $C_2F_3Cl$. On dégaze le réacteur et on récupère un latex à 33% d'extrait sec de composition hétérogène par microscopie contenant un taux global de 12% poids de $C_2F_3Cl$.

Selon une 2ème méthode, on peut :

- dans une 1$^{ère}$ étape, introduire dans le réacteur et polymériser une 1$^{ère}$ charge de VDF, puis
- dans une 2$^{ème}$ étape, après avoir obtenu une certaine conversion en polymère, avantageusement comprise entre 50 et 90%, de préférence entre 70 et 80%, introduire le comonomère et le VDF. Le comonomère peut être introduit soit en une seule fois soit progressivement.

La vitesse d'introduction du comonomère dépend du moment d'introduction. Par exemple, dans le cas où le comonomère, notamment l'HFP, est introduit après une conversion supérieure à 80%, le comonomère doit être introduit rapidement, c'est-à-dire en une seule fois. A l'inverse, lorsque le comonomère, notamment l'HFP, est introduit pour une conversion comprise entre 50 et 80%, le comonomère peut être introduit rapidement ou progressivement. Des exemples sont donnés dans EP 0456019 A1.

exemple 1 illustrant la 2$^{ème}$ méthode: copolymère hétérogène VDF/HFP (10% en poids HFP)

On charge dans un réacteur de 400 litres, 206 kg d'eau desionisée, 100 g de perfluorodécanoate d'ammonium, 12 g de paraffine. On élève la température à 90˚C et on charge 9 kg de VDF et 3 kg de trichlorofluorométhane (TCFM). Lorsque là température est stabilisée, on injecte 0,45 kg de peroxydicarbonate d'isopropyle sous la forme d'une émulsion comprenant 1%poids d'IPP dans de l'eau contenant 0,15% de perfluorodécanoate d'ammonium. Puis, l'amorceur est injecté progressivement de façon à maintenir la polymérisation du VDF à une vitesse de l'ordre de 27 kg/heure. Lorsque approximativement 61 kg de VDF ont été introduits et polymérisés, soit environ 75% du VDF total, on introduit 9 kg d'HFP en continu à une vitesse de 45 kg/heure et on introduit en continu aussi du VDF. On injecte encore de l'IPP pour favoriser la copolymérisation. On poursuit jusqu'à avoir introduit 82 kg de VDF. Le PVDF hétérogène a une viscosité de 1,4 kP (230˚C, 100 s$^{-1}$) et une température de fusion de 163-168˚C.

exemple 2 illustrant la 2$^{éme}$ méthode: copolymère hétérogène VDF/HFP (10% en poids HFP)

On reprend les conditions de l'exemple 1 précédent mais en présence de 1,4 kg de TCFM et une teneur initiale en IPP de 0,05%poids par rapport à la charge initiale en VDF. Le PVDF hétérogène a une viscosité de 15,4 kP (230˚C, 100 s$^{-1}$) et une température de fusion de 163-168˚C.

exemple 3 illustrant la 2$^{ème}$ méthode: copolymère hétérogène VDF/HFP (10% en poids HFP)

On reprend les conditions de l'exemple 1 mais en adaptant la teneur en TCFM pour obtenir un PVDF hétérogène ayant une viscosité de 2350 Pa s (230˚C, 100 s$^{-1}$) et une température de fusion de 166˚C.

La 2$^{éme}$ méthode peut être utilisée avec profit pour des copolymères hétérogènes VDF/HFP ayant une teneur globale en HFP comprise entre 5 et 15% poids.

Selon une 3$^{ème}$ méthode, on introduit en une seule fois dans le réacteur et on polymérise une charge comprenant le VDF et le comonomère, puis on laisse la copolymérisation se poursuivre jusqu'à la fin. La totalité des monomères est donc introduite en une seule fois au départ de la polymérisation. Des exemples sont donnés dans EP 0552931 B1. Ainsi, un PVDF selon ce brevet est décrit comme étant constitué de nodules élastomériques de copolymère hétérogène de VDF et de comonomère(s) représentant plus de 55% en poids du PVDF, dispersés dans une phase continue cristalline de quasi-polymère de VDF représentant au moins 10% en poids du PVDF. Par nodules élastomériques, on désigne la fraction du PVDF extraite par trempage d'une coupe microtomique d'une épaisseur de 0,1 $\mu$m dans la méthyléthylcétone à température ambiante pendant 16 heures. Cette fraction, qui constitue la phase élastomérique contient la quasi totalité de(s) comonomère(s) du PVDF. La taille des nodules est comprise entre 0,05 et 1,5 $\mu$m. Par quasi-polymère de VDF, on désigne la fraction du PVDF non extraite par trempage de la coupe microtomique. Cette fraction qui constitue la phase continue cristalline du PVDF est constituée essentiellement de quasi polymère de VDF, c'est-à-dire d'un polymère de VDF dont les chaînes de polymère sont constituées essentiellement de VDF.

Les trois méthodes ainsi décrites à titre d'illustration de procédés de préparation d'un PVDF hétérogène se distinguent du procédé dans lesquel il n'y a qu'une étape au cours de laquelle le VDF et le comonomère sont injectés en une seule fois dans le réacteur. Elles se distinguent aussi des procédés en une seule étape dans lesquels le VDF et le comonomère sont injectés progressivement en conservant un rapport massique VDF/comonomère constant.

Une autre méthode de préparation d'un PVDF hétérogène consiste à mélanger de façon intime une poudre de PVDF homopolymère et une poudre de PVDF copolymère homogène. Il est possible aussi de mélanger une dispersion ou une suspension aqueuse d'un PVDF homopolymère et une dispersion ou une suspension aqueuse d'un PVDF copolymère homogène.

Avantageusement, le PVDF hétérogène a une viscosité allant de 100 Pa.s à 10000 Pa.s, de préférence entre 300 et 3000 Pa.s la viscosité étant mesurée à 230˚C, à un gradient de cisaillement de 100 s$^{-1}$ à l'aide d'un rhéomètre capillaire.

**S'agissant de l'agent d'interface (B),** on désigne ainsi tout produit qui mélangé avec (A) dans les conditions citées plus haut pour faire un mélange maître améliore l'efficacité du mélange maître en tant qu'agent d'extrusion. A titre d'exemple d'agent d'interface (B), on peut citer:

a) les silicones ;
b) les copolymères silicones-polyéthers ;
c) les polyesters aliphatiques, tels que le poly(butylène adipate), poly(acide lactique) et les polycaprolactones ;
d) les polyesters aromatiques tels que par exemple le diisobutyl ester d'acide phtalique ;
e) les polyéthers tels que par exemple les polyéthers polyols et les poly(oxyde d'alkylène) tels que par exemple définis dans US 4855360 **;**
f) les oxydes d'amine tels que par exemple l'oxyde d'octyldiméthyl amine ;
g) les acides carboxyliques tels que par exemple l'acide hydroxy-butanedioïque ;
h) les esters d'acide gras tels que le monolaurate de sorbitane.

Sans être tenu par une quelconque interprétation, il est possible que la fonction de l'agent d'interface (B) soit de stabiliser le polymère fluoré (A). Il interagit physiquement et/ou chimiquement avec le polymère fluoré (A).

Avantageusement, (B) est un polyéther, de préférence choisi parmi des oligomères ou des polymères ayant des motifs oxyde d'alkylène (par ex. oxyde d'éthylène ou de propylène) ou une polycaprolactone. On peut citer à titre d'exemple le poly(oxyéthylène)glycol appelé communément polyéthylène glycol (PEG). Avantageusement, la masse moléculaire moyenne en nombre $\overline{Mn}$ est comprise entre 400 et 15000 g/mole (celle-ci peut être par exemple déterminée à l'aide de mesures de viscosités) et la température de fusion comprise entre 50 et 80˚C. A titre d'exemple de PEG on peut citer le PLURIOL E® de la société BASF ou le POLYGLYKOL® de la société CLARIANT. On ne sortirait pas du cadre de l'invention en utilisant un mélange de deux ou plusieurs polyéthers.

Ces PEG et d'autres exemples de PEG sont décrits dans les brevets US 5587429 et US 5015693**.** Ainsi, on peut citer :

- le polyéthylène glycol de formule $H(OC_2H_4)_nOH$ où n est un entier proche de 76, compris entre 70 et 80 ;
- $H(OC_2H_4)_d[OCH(CH_3)CH_2]_e(OC_2H_4)_fOH$ où d, e et f désignent des entiers avec d+f est proche de 108, compris entre 100 et 110, et e proche de 35, entre 30 et 40 ;
- le CARBOWAX® 3350 ayant une masse moléculaire moyenne en nombre d'environ 3500 g/mol ;
- le CARBOWAX® 8000 ayant une masse moléculaire moyenne en nombre d'environ 8000 g/mol ;
- le POLYGLYCOL® 8000 de CLARIANT ayant une masse moléculaire moyenne en nombre comprise entre 7000 et 9000 g/mol.

La polycaprolactone a de préférence une masse moyenne en nombre comprise entre 1000 et 32000, de préférence entre 2000 et 10000, et encore plus préférentiellement entre 2000 et 4000 g/mol.

**S'agissant de la résine thermoplastique (D)**, celle-ci peut être une polyoléfine, une résine styrénique, un polyester ou un PVC.

La polyoléfine peut être par exemple :

• un polyéthylène, notamment un polyéthylène basse densité (LDPE), haute densité (HDPE), basse densité linéaire (LLDPE), très haute densité (UHDPE). Il peut s'agir d'un polyéthylène obtenu à l'aide d'un catalyseur du type métallocène ou plus généralement d'un catalyseur dit « monosite », d'un catalyseur de type Phillips ou d'un catalyseur de type Ziegler-Natta.
• un polypropylène, notamment un polypropylène iso- ou syndiotactique ;
• un polypropylène biorienté ;
• un polybutène (obtenus à partir du butène-1) ;
• un poly(3-méthyl butène) ou un poly(4-méthyl pentène).

On ne sortirait pas du cadre de l'invention dans le cas de l'extrusion d'un mélange chargé de deux ou plusieurs polyoléfines, par exemple un mélange d'un LLDPE avec un LDPE.

Le mélange maître est particulièrement intéressant pour les polyéthylènes de haute masse moléculaire et/ou présentant une distribution de masses moléculaires étroites (typiquement telle que l'indice de polymolécularité est inférieur à 3, plutôt inférieur à 2,5, et encore mieux inférieur à 2,2). Il est particulièrement utile pour l'extrusion d'une polyoléfine, notamment un polyéthylène, sous forme de film.

On désigne par résine styrénique un homopolystyrène ou un copolymère du styrène renfermant au moins 50% en poids de styrène. Il peut s'agir d'un polystyrène cristal, d'un polystyrène choc, d'un copolymère acrylonitrile-butadiène-styrène (ABS) ou d'un copolymère séquencé, par exemple un copolymère comprenant du styrène et un diène.

Le polyester peut être par exemple le poly(éthylène téréphtalate) (PET) ou le poly(butylène téréphtalate) (PBT).

La résine thermoplastique peut être chargée c'est-à-dire contenir des particules organiques ou minérales dispersées. La charge minérale peut être par exemple une silice, une alumine, une zéolithe, un oxyde de titane, un carbonate (par ex. de sodium, de potassium), de l'hydrotalcite, du talc, un oxyde de zinc, un oxyde de magnésium ou de calcium, une terre de diatomée, du noir de carbone,... Il peut s'agir aussi d'un pigment minéral. Les particules organiques peuvent être par exemple celles d'un pigment organique ou bien d'un antioxydant.

**S'agissant de l'agent d'extrusion,** celui-ci comprend selon une 1ère forme, au moins un PVDF hétérogène (A) et au moins un agent d'interface (B), éventuellement dilués dans une polyoléfine (C). Les proportions respectives de (A) et (B) en poids peuvent être telles que (A) / (B) est compris entre 10/90 et 90/10 et de préférence entre 30/70 et 70/30 et mieux encore entre 40/60 et 60/40. Selon une 2ème forme, l'agent d'extrusion peut être constitué du PVDF hétérogène utilisée seul.

Lorsque (A) et (B) sont dilués dans une polyoléfine (C) pour donner un mélange maître, la proportion en poids de (A) et (B) est de 1 à 30%, de préférence de 1 à 10%, préférentiellement de 1,5 à 10%, encore plus préférentiellement de 2 à 10% pour respectivement de 70 à 99%, de préférence de 90 à 99%, préférentiellement de 90 à 98,5%, encore plus préférentiellement de 90 à 98% de (C).

L'agent d'extrusion est préparé en mélangeant au moins un PVDF hétérogène (A) et au moins un agent d'interface (B). Ce mélange peut être ensuite utilisé tel quel ou bien être dilué dans une polyoléfine (C) sous forme d'un mélange maître. Le mélange de (A) et de (B) ou bien le mélange maître se présente sous forme d'une poudre ou de granulés. Le procédé d'obtention de l'agent d'extrusion comprend donc une étape de mélange de (A) et de (B), suivie d'une étape de mise sous la forme d'une poudre ou de granulés, et éventuellement une étape de dilution du mélange dans une polyoléfine, suivie d'une étape de mise sous la forme d'une poudre ou de granulés.

L'étape de mélange de (A) et de (B) est réalisée à l'aide de tout moyen de mélange adapté aux matières thermoplastiques. On peut utiliser par exemple une extrudeuse ou une malaxeuse. On peut aussi avantageusement utiliser la technique de compactage. Celle-ci consiste à introduire (A) et (B), tous deux sous forme de poudres, dans une presse à granuler, puis à forcer le mélange à travers une filière. La figure 3/3 représente schématiquement le principe de fonctionnement d'une presse à granuler. Celle-ci comprend un galet en rotation qui vient comprimer/mélanger le mélange de (A) et de (B), puis le mélange est pressé dans les canaux de compression de la filière perforée de façon à former un granulé cylindrique qui est ensuite découpé à l'aide d'un dispositif de coupe situé sous la filière. La friction engendrée lors du mélange des poudres dans la presse permet de passer le point de fusion de l'agent d'interface (B).

De préférence, et de façon surprenante, une bonne efficacité est obtenue lorsque le mélange est réalisé de telle sorte que le PVDF hétérogène (A) est solide et l'agent d'interface (B) est fondu dans sa masse ou à sa surface. De préférence, la température à laquelle est réalisé le mélange de (A) et de (B) est choisie de telle sorte que (B) présente une viscosité pas trop faible. La température est choisie pour que :

· l'agent d'interface (B) soit à l'état fondu dans sa masse ou à sa surface et

· le polymère fluoré (A) à l'état solide.

L'agent d'interface est dit fondu dans sa masse lorsqu'il est entièrement liquide. Il est dit fondu à sa surface lorsque les particules d'agent d'interface sont recouvertes par une couche superficielle fondue et sont solides en leur coeur. La technique de compactage est bien adaptée à cela mais il est possible d'utiliser aussi une extrudeuse fonctionnant avec des températures de zone judicieusement choisies et contrôlées.

Le mélange de (A) et (B) est de préférence effectué à une température comprise entre 10 et 120˚C, avantageusement entre 20 et 100˚C, de préférence entre 40 et 100˚C, encore plus préférentiellement entre 60 et 100˚C. En opérant ainsi, on a constaté qu'on obtient une meilleure efficacité qu'en opérant à une température telle que (A) et (B) sont tous deux à l'état fondu. Une température inférieure à 120˚C permet de ne pas dégrader thermiquement l'agent d'interface (B) ce qui pourrait affecter son efficacité dans le mélange ou conduire à un jaunissement. Pour favoriser un mélange intime, on préfère que le polymère fluoré (A) soit sous forme d'une poudre, c'est-à-dire sous forme dispersée.

Sans être tenu par aucune théorie, il est possible que la meilleure efficacité de l'agent d'extrusion par rapport à d'autres solutions, soit liée au fait que (A) et (B) interagissent physiquement et/ou chimiquement lors de l'étape de mélange. Cette façon de faire est plus efficace que celle consistant par exemple à ajouter à la résine thermoplastique un mélange maître de (A) et un mélange maître de (B), pour laquelle il n'y a pas un aussi bon contact entre (A) et (B) avant le contact avec la résine thermoplastique. Elle est plus efficace aussi que la méthode consistant à introduire (A) et (B) séparément.

La dilution dans la polyoléfine (C) peut être réalisée dans tout outil de mélange des matières plastiques que connaît l'homme du métier. Il peut s'agir par exemple d'une extrudeuse ou d'un malaxeur. De préférence, il s'agit d'une extrudeuse.

Avantageusement, lorsque la résine thermoplastique est une polyoléfine, on choisit une polyoléfine (C) de même nature, c'est-à-dire qu'il s'agit par exemple de deux polyéthylènes ou de deux polypropylènes et de préférence ayant des viscosités peu éloignées.

On ne sortirait pas du cadre de l'invention si des additifs de type absorbeurs UV ou antioxydants étaient ajoutés à l'agent d'extrusion.

**best mode**

Un agent d'extrusion particulièrement efficace est celui qui combine le PVDF hétérogène préféré qui est le copolymère VDF-HFP comprenant en poids de 88 à 92% de VDF et de 8 à 12% d'HFP présentant une Tf entre 160 et 172˚C, tel que par exemple le PVDF-1 (voir la partie exemples) et un PEG ou une polycaprolactone.

**[Utilisation]**

L'agent d'extrusion est utilisé pour réduire ou éliminer les défauts de surface qui apparaissent lors de l'extrusion de la résine thermoplastique. Il réduit de façon significative le temps permettant d'obtenir une extrusion stable et sans défaut dans une gamme de paramètre d'extrusion qui normalement présente des instabilités importantes d'extrusion. Etant plus efficace que d'autres agents d'extrusion déjà commercialisés, l'agent d'extrusion de l'invention permet de réduire la quantité à ajouter à la résine thermoplastique. Ceci permet de :

- réduire les coûts associés à l'extrusion ;
- réduire les problèmes de coloration et/ou d'odeur liés à la décomposition de l'agent d'interface ;
- réduire les risques d'interactions chimiques entre l'agent d'interface et/ou le polymère fluoré et les éventuels autres additifs de la résine thermoplastique, notamment les antioxydants.

L'agent d'extrusion et la résine thermoplastique sont mis en contact à l'état solide avant l'extrusion. Ils peuvent être prémélangés à l'état solide ou simplement introduits dans la trémie de l'extrudeuse. L'agent d'extrusion peut aussi être introduit à l'état fondu en un point quelconque de l'extrudeuse qui sert à extruder la résine thermoplastique, par exemple à l'aide d'une extrudeuse latérale.

L'agent d'extrusion est particulièrement utile pour l'extrusion d'une résine thermoplastique sous forme d'un film ou bien sous forme d'un tube, d'un profilé, d'un corps creux,... Outre les avantages déjà mentionnés, il facilite l'obtention d'une surface lisse et sans défaut, ce qui est particulièrement important dans le cas d'un film pour obtenir de bonnes propriétés optiques. L'agent d'extrusion permet aussi de réduire la pression au niveau de l'entrefer de la filière ainsi que le taux de gels. Il permet aussi dans une certaine mesure de réduire les dépots en sortie de filière.

L'agent d'extrusion est utilisé sous forme de granulés ou sous forme d'une poudre.

La proportion de mélange maître à introduire dans la résine thermoplastique est avantageusement telle que la quantité de (A)+(B) par rapport à la résine thermoplastique est de l'ordre de 100 ppm à 100000 ppm, avantageusement de 1000 à 80000 ppm, de préférence de 1000 à 10000 ppm.

**[Exemples]**

**Produits utilisés**

On a utilisé les produits suivants :

INNOVEX® LL0209AA désigne un polyéthylène basse densité linéaire de MFI 0,9 g/10 min (190˚C, 2,16 kg) vendu par la société INNOVENE (auparavant vendu par BP Chemicals).

LACQTENE® 1003FE23 désigne un polyéthylène basse densité de MFI 0,3 g/10 min (190˚C, 2,16 kg) vendu par TOTAL PETROCHEMICALS (auparavant par ATOFINA).

PVDF-1 : PVDF hétérogène préparé selon l'exemple 3 illustrant la 2ème méthode. C'est un PVDF hétérogène VDF-HFP (10% poids HFP) de température de fusion 166˚C et de viscosité de 2350 Pa s (230˚C, 100 s$^{-1}$).

PVDF-2 : PVDF homogène VDF-HFP (11% poids HFP) de MVI 1,5 cm$^3$/ 10 minutes (230˚C, 5 kg), de température de fusion 140 -145˚C et de viscosité de 1600 Pas (230˚C, 100 s$^{-1}$).

Pluriol E 9000P : PEG vendu par la société BASF de masse moléculaire 9000 g/mol.

**Mélange maître MM-1**

On incorpore par extrusion monovis dans du LL0209AA 5% de PVDF-2. Le mélange maître ainsi obtenu est noté MM-1 (il contient donc globalement en poids 95% de LL0209AA et 5% de PVDF-2).

**Mélange maître MM-2**

On incorpore par extrusion monovis dans du LL0209AA 5% de PVDF-1. Le mélange maître ainsi obtenu est noté MM-2 (il contient donc globalement en poids 95% de LL0209AA et 5% de PVDF-1).

**Mélange maître MM-3**

On prépare un mélange à sec renfermant en poids 60% de PVDF-2 et 40% de Pluriol E 9000P. Ce mélange est ensuite incorporé par extrusion monovis à hauteur de 5 % en poids dans du LL0209AA. Le mélange maître ainsi obtenu est noté MM-3 (il contient donc globalement : 95% de LL0209AA, 3% de PVDF-2 et 2% de PEG).

**Mélange maître MM-4**

On prépare un mélange à sec renfermant en poids 60% de PVDF-1 et 40% de Pluriol E 9000P. Ce mélange est ensuite incorporé par extrusion monovis à hauteur de 5 % en poids dans du LL0209AA. Le mélange maître ainsi obtenu est noté MM-4 (il contient donc globalement : 95% de LL0209AA, 3% de PVDF-1 et 2% de PEG).

Dans les exemples suivants tous les essais d'extrusion film ont été réalisés à 8 kg/heure. Dans les exemples ci-après, le polymère qui sert de base à cette étude est un mélange de 70% en poids de polyéthylène INNOVEX LL0209AA et de 30% de polyéthylène LACQTENE 1003FE23. Ce mélange est nommé mélange (Pol).

**Exemple 1**

Extrusion à 190°C du mélange (Pol), sur une ligne d'extrusion soufflage de gaine de la société COLLIN de diamètre de vis 30 mm, de UD = 25 avec une filière de 50,5 mm de diamètre et de 0,8 mm d'entrefer. Lors de cette extrusion le défaut « melt fracture » apparaît instantanément. Après 120 minutes d'extrusion le défaut persiste sur la totalité du film produit, puis l'expérience est stoppée.

**Exemples 2 à 5**

On reprend les mêmes conditions d'essai avec les mélanges maîtres MM-1 à MM-4 (voir le graphe de la figure 3/3).

**Tableau 1**

| exemples | | temps pour atteindre 0% défaut (min) |
|---|---|---|
| aucun additif | | défaut persistant même après 120 min d'extrusion |
| MM-1 (comp.) | PVDF homogène | 90 |
| MM-2 (inv.) | PVDF hétérogène | 55 |
| MM-3 (comp.) | PVDF homogène + PEG | 70 |
| MM-4 (inv.) | PVDF hétérogène + PEG | 45 |

D'après les résultats obtenus, on constate que les mélanges maîtres peuvent être classés par efficacité décroissante dans l'ordre :

# MM-1 < MM-2 < MM-3 < MM-4

Le PVDF hétérogène (PVDF-1) est plus efficace qu'un PVDF homogène. De plus, le mélange maître comprenant à la fois un PVDF hétérogène et un PEG est le plus efficace de tous.

**Revendications**

**1.** Agent d'extrusion comprenant :

- au moins un PVDF hétérogène (A) c'est-à-dire un copolymère du VDF et d'au moins un comonomère du VDF comprenant en poids au moins 75% de VDF, ledit copolymère présentant une température de fusion Tf est comprise entre 160 et 172˚C
- et au moins un agent d'interface (B),
- éventuellement dilués dans une polyoléfme (C).

2. Agent d'extrusion selon la revendication 1 dans lequel le PVDF hétérogène (A) présente une Tf (exprimée en ˚C) entre (172 - 340 m) et 172˚C, plutôt entre (172-269 m) et 172˚C, avantageusement entre (172-203 m) et 172˚C, encore plus avantageusement entre (172-138 m) et 172˚C où m désigne le pourcentage molaire global en comonomère(s).

3. Agent d'extrusion selon l'une quelconque des revendications 1 à 2 dans lequel le PVDF hétérogène comprend de 0,1 à 25%, avantageusement de 1 à 20%, de préférence de 1 à 15%, encore plus préférentiellement de 5 à 15% d'au moins un comonomère pour respectivement de 75 à 99,9%, avantageusement de 80 à 99%, de préférence de 85 à 99%, encore plus préférentiellement de 85 à 95% de VDF.

4. Agent d'extrusion selon l'une quelconque des revendications 1 à 3 **caractérisé en ce que** le comonomère est choisi parmi le fluorure de vinyle, le trifluoroéthylène (VF3), le chlorotrifluoroéthylène (CTFE), le 1,2-difluoroéthylène, le tetrafluoroéthylène (TFE), l'hexafluoropropylène (HFP), les perfluoro(alkyl vinyl) éthers.

5. Agent d'extrusion selon l'une quelconque des revendications 1 à 4 dans lequel le PVDF hétérogène (A) est un copolymère VDF-HFP comprenant en poids de 88 à 92% de VDF et de 8 à 12% d'HFP.

6. Agent d'extrusion selon l'une quelconque des revendications 1 à 5 dans lequel l'agent d'interface (B) est choisi parmi :

   a) les silicones ;
   b) les copolymères silicones-polyéthers ;
   c) les polyesters aliphatiques, tels que le poly(butylène adipate), poly(acide lactique) et les polycaprolactones ;
   d) les polyesters aromatiques tels que le diisobutyl ester d'acide phtalique ;
   e) les polyéthers tels que les polyéthers polyols et les poly(oxyde d'alkylène) ;
   f) les oxydes d'amine tels que l'oxyde d'octyldiméthyl amine ;
   g) les acides carboxyliques tels que l'acide hydroxy-butanedioïque ;
   h) les esters d'acide gras tels que le monolaurate de sorbitane.

7. Agent d'extrusion selon l'une quelconque des revendications 1 à 5 dans lequel l'agent d'interface (B) est choisi parmi les oligomères ou polymères ayant des motifs oxyde d'alkylène ou une polycaprolactone.

8. Agent d'extrusion selon l'une quelconque des revendications 1 à 7 dans lequel l'agent d'interface (B) est choisi parmi le polyéthylène glycol de formule $H(OC_2H_4)_nOH$ où n est un entier compris entre 70 et 80 ou de formule $H(OC_2H_4)_d[OCH(CH_3)CH_2]_e(OC_2H_4)_fOH$ où d, e et f désignent des entiers avec d+f compris entre 100 et 110, et e compris entre 30 et 40.

9. Agent d'extrusion selon l'une quelconque des revendications 1 à 5 dans lequel l'agent d'interface (B) est un polyéthylène glycol (PEG).

10. Agent d'extrusion selon la revendication 9 dans lequel le PEG a une masse moléculaire moyenne en nombre Mn comprise entre 400 et 15000 g/mole.

11. Agent d'extrusion selon la revendication 9 ou 10 dans lequel le PEG a une température de fusion comprise entre 50 et 80˚C.

12. Utilisation d'un agent d'extrusion tel que défini à l'une quelconque des revendications 1 à 11 ou d'un PVDF hétérogène (A) tel que défini à l'une quelconque des revendications 1 à 6 pour réduire ou éliminer les défauts de surface qui apparaissent lors de l'extrusion d'une résine thermoplastique (D).

13. Utilisation selon la revendication 12 dans laquelle la résine thermoplastique (D) est une polyoléfine, une résine styrénique, un polyester ou un PVC.

**14.** Utilisation selon l'une des revendications 12 ou 13 dans laquelle la résine thermoplastique (D) contient des particules organiques ou minérales dispersées.

**15.** Procédé d'extrusion d'une résine thermoplastique (D) en présence d'un agent d'extrusion tel que défini à l'une quelconque des revendications 1 à 11 ou d'un PVDF hétérogène (A) tel que défini à l'une des revendications 1 à 5.

**Claims**

**1.** A processing aid comprising:

• at least one heterogeneous PVDF (A), that is to say a copolymer of VDF and of at least one comonomer of VDF comprising at least 75 wt% of VDF which has a melting point MP between 160 and 172˚C,
• and at least one interfacial agent (B),
• optionally diluted in a polyolefin (C).

**2.** The processing aid as claimed in claim 1, in which the heterogeneous PVDF (A) has an MP (expressed in ˚C) between (172 - 340 m) and 172˚C, rather between (172 - 269 m) and 172˚C, advantageously between (172 - 203 m) and 172˚C, even more advantageously between (172 - 138 m) and 172˚C where m denotes the overall molar percentage of comonomer(s).

**3.** The processing aid as claimed in either one of claims 1 and 2, in which the heterogeneous PVDF comprises from 0.1 to 25%, advantageously from 1 to 20%, preferably from 1 to 15%, more preferably still from 5 to 15% of at least one comonomer per 75 to 99.9%, advantageously 80 to 99%, preferably 85 to 99%, more preferably still 85 to 95% respectively of VDF.

**4.** The processing aid as claimed in any one of claims 1 to 3, **characterized in that** the comonomer is chosen from vinyl fluoride, trifluoroethylene (VF3), chlorotrifluoroethylene (CTFE), 1,2-difluoroethylene, tetrafluoroethylene (TFE), hexafluoropropylene (HFP) and perfluoro(alkyl vinyl) ethers.

**5.** The processing aid as claimed in any one of claims 1 to 4, in which the heterogeneous PVDF (A) is a VDF-HFP copolymer comprising from 88 to 92 wt% of VDF and from 8 to 12 wt% of HFP.

**6.** The processing aid as claimed in any one of claims 1 to 5, in which the interfacial agent (B) is chosen from:

a) silicones;
b) silicone-polyether copolymers;
c) aliphatic polyesters, such as polybutylene adipate, polylactic acid and polycaprolactones;
d) aromatic polyesters such as the diisobutyl ester of phthalic acid;
e) polyethers such as polyether polyols and polyalkylene oxides;
f) amine oxides such as octyldimethylamine oxide;
g) carboxylic acids such as hydroxybutanedioic acid; and
h) fatty acid esters such as sorbitan monolaurate.

**7.** The processing aid as claimed in any one of claims 1 to 5, in which the interfacial agent (B) is chosen from oligomers or polymers having alkylene oxide units or a polycaprolactone.

**8.** The processing aid as claimed in any one of claims 1 to 7, in which the interfacial agent (B) is chosen from polyethylene glycol of formula $H(OC_2H_4)_nOH$ where n is an integer between 70 and 80 or of formula $H(OC_2H_4)_d[OCH(CH_3)CH_2]_e(OC_2H_4)_fOH$ where d, e and f denote integers with d + f between 100 and 110, and e between 30 and 40.

**9.** The processing aid as claimed in any one of claims 1 to 5, in which the interfacial agent (B) is a polyethylene glycol (PEG).

**10.** The processing aid as claimed in claim 9, in which the PEG has a number-average molecular weight $\overline{M_n}$ between 400 and 15 000 g/mol.

**11.** The processing aid as claimed in claim 9 or 10 in which the PEG has a melting point between 50 and 80˚C.

12. The use of a processing aid as defined in any one of claims 1 to 11 or of a heterogeneous PVDF (A) as defined in any one of claims 1 to 6 for reducing or eliminating the surface defects which appear during extrusion of a thermoplastic resin (D).

13. The use as claimed in claim 12, in which the thermoplastic resin (D) is a polyolefin, a styrene resin, a polyester or a PVC.

14. The use as claimed in either of claims 12 and 13, in which the thermoplastic resin (D) contains dispersed organic or mineral particles.

15. A process of extruding a thermoplastic resin (D) in the presence of a processing aid as defined in any one of claims 1 to 11 or of a heterogeneous PVDF (A) as defined in one of claims 1 to 5.

**Patentansprüche**

1. Extrusionshilfsmittel umfassend:

   - mindestens ein heterogenes PVDF (A), d.h. ein Copolymer von VDF und mindestens einem Comonomer des VDF, das zumindest 75 Gew.-% VDF enthält, wobei das Copolymer eine Schmelztemperatur Tf zwischen 160 und 172 °C aufweist,
   - und mindestens ein Grenzflächenmittel (B),
   - die gegebenenfalls in einem Polyolefin (C) verdünnt sind.

2. Extrusionshilfsmittel nach Anspruch 1, wobei das heterogene PVDF (A) eine Tf (ausgedrückt in °C) zwischen (172 - 340 m) und 172 °C, besonders zwischen (172 - 269 m) und 172 °C, vorteilhaft zwischen (172 - 203 m) und 172 °C und noch vorteilhafter zwischen (172 - 138 m) und 172 °C aufweist, wobei m den prozentualen molaren Anteil an Comonomer(en) insgesamt angibt.

3. Extrusionshilfsmittel nach einem der Ansprüche 1 bis 2, wobei das heterogene PVDF 0,1 bis 25 %, vorteilhaft 1 bis 20 %, vorzugsweise 1 bis 15 % und noch bevorzugter 5 bis 15 % mindestens eines Comonomers auf 75 bis 99,9 %, vorteilhaft 80 bis 99 %, vorzugsweise 85 bis 99 % bzw. noch bevorzugter 85 bis 95 % VDF umfasst.

4. Extrusionshilfsmittel nach einem der Ansprüche 1 bis 3, **dadurch gekennzeichnet, dass** das Comonomer unter Vinylfluorid, Trifluorethylen (VF3), Chlortrifluorethylen (CTFE), 1,2- Difluorethylen, Tetrafluorethylen (TFE), Hexafluorpropylen (HFP) und Perfluor(alkylvinyl)ethern ausgewählt ist.

5. Extrusionshilfsmittel nach einem der Ansprüche 1 bis 4, wobei es sich bei dem heterogenen PVDF (A) um ein VDF/HFP-Copolymer handelt, das 88 bis 92 Gew.-% VDF und 8 bis 12 Gew.-% HFP enthält.

6. Extrusionshilfsmittel nach einem der Ansprüche 1 bis 5, wobei das Grenzflächenmittel (B) ausgewählt ist unter:

   a) Siliconen;
   b) Silicone/Polyether-Copolymeren;
   c) aliphatischen Polyestern, wie Poly(butylenadipat), Poly(milchsäure) und Polycaprolactonen;
   d) aromatischen Polyestern, wie Phthalsäurediisobutylester;
   e) Polyethern, wie Polyetherpolyolen und Poly(alkylenoxiden);
   f) Aminoxiden, wie Octyldimethylaminoxid;
   g) Carbonsäuren, wie Hydroxybutandisäure;
   h) Fettsäureestern, wie Sorbitanmonolaurat.

7. Extrusionshilfsmittel nach einem der Ansprüche 1 bis 5, wobei das Grenzflächenmittel (B) unter den Oligomeren oder Polymeren, die Alkylenoxideinheiten aufweisen, oder einem Polycaprolacton ausgewählt ist.

8. Extrusionshilfsmittel nach einem der Ansprüche 1 bis 7, wobei das Grenzflächenmittel (B) unter dem Polyethylenglycol der Formel $H(OC_2H_4)_nOH$, worin n eine ganze Zahl im Bereich von 70 bis 80 bedeutet, oder der Formel $H(OC_2H_4)_d[OCH(CH_3)CH_2]_e(OC_2H_4)_fOH$ ausgewählt ist, worin d, e und f ganze Zahlen mit d + f im Bereich von 100 bis 110 und e im Bereich von 30 bis 40 bedeuten.

9. Extrusionshilfsmittel nach einem der Ansprüche 1 bis 5, wobei das Grenzflächenmittel (B) ein Polyethylenglycol (PEG) ist.

10. Extrusionshilfsmittel nach Anspruch 9, wobei das PEG eine zahlenmittlere Molmasse $\overline{Mn}$ im Bereich von 400 bis 15000 g/mol aufweist.

11. Extrusionshilfsmittel nach Anspruch 9 oder 10, wobei das PEG eine Schmelztemperatur im Bereich von 50 bis 80 ˚C aufweist.

12. Verwendung eines Extrusionshilfsmittels, wie es in einem der Ansprüche 1 bis 11 definiert ist, oder eines heterogenen PVDF (A), wie es in einem der Ansprüche 1 bis 6 definiert ist, um die Fehler an der Oberfläche zu vermindern oder zu eliminieren, die bei der Extrusion eines thermoplastischen Harzes (D) auftreten.

13. Verwendung nach Anspruch 12, wobei das thermoplastische Harz (D) ein Polyolefin, ein Styrolharz, ein Polyester oder ein PVC ist.

14. Verwendung nach einem der Ansprüche 12 oder 13, wobei das thermoplastische Harz (D) dispergierte organische oder anorganische Partikel enthält.

15. Verfahren zur Extrusion eines thermoplastischen Harzes (D) in Gegenwart eines Extrusionshilfsmittels, wie es in einem der Ansprüche 1 bis 11 definiert ist, oder eines heterogenen PVDF (A), wie es in einem der Ansprüche 1 bis 5 definiert ist.

# FIG.1

# FIG.2

# FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3334157 A
- US 20030236357 A
- US 4855360 A
- US 5587429 A
- WO 0044829 A
- WO 02066544 A
- US 5015693 A
- US 4983677 A

- US 4863983 A
- US 6277919 B
- US 2752331 A
- US 2559752 A
- US 3311566 A
- EP 0280591 A1
- EP 0456019 A1
- EP 0552931 B1